# EUROPÄISCHE PATENTSCHRIFT

(11) **EP 2 774 794 B1**
(45) Veröffentlichungstag und Bekanntmachung des Hinweises auf die Patenterteilung: **18.05.2016**
(21) Anmeldenummer: 13001071.3
(22) Anmeldetag: 04.03.2013
(51) Int. Cl.: B60J 7/19, B60J 7/043, B60J 7/11

(54) **Fahrzeug-Schiebedachvorrichtung**
Vehicle sliding roof device
Dispositif de toit coulissant de véhicule

(43) Veröffentlichungstag der Anmeldung: 10.09.2014
(73) Patentinhaber: Webasto SE, 82131 Stockdorf (DE)
(72) Erfinder: Inzerillo, Gioacchino, 10036 Sellimo Torinese (TO) (IT); Marrocco, Pasquale, 10040 Rivalta di Torino (IT)
(74) Vertreter: Fischer & Konnerth

(56) Entgegenhaltungen:
- DE-A- 3 223 750
- DE-C1- 3 413 189
- DE-C1- 3 545 015
- FR-A1- 2 969 046

## Beschreibung

Die Erfindung betrifft eine Fahrzeug-Schiebedachvorrichtung mit einer einen Deckel und einen Deckelrahmen aufweisenden Deckeleinheit, die mittels einer Lagereinrichtung an Führungen der Schiebedachvorrichtung verschiebbar gelagert und zwischen einer eine Dachöffnung abdeckenden Schließstellung und zumindest einer Offenstellung verstellbar ist.

Aus der DE 32 23 750 C2 ist eine Fahrzeug-Schiebedachvorrichtung bekannt geworden, deren Schiebedachdeckel aus einer Dachöffnung sowohl ausstellbar wie auch abgesenkt unter eine nach hinten angrenzende Dachfläche verfahrbar ist. Der Deckel weist einen mit dem Deckel fest verbundenen Deckelrahmen und seitliche Blenden auf, die einen Ausstell- und Absenkmechanismus enthalten, über den der Deckel an seinem Hinterrand ausstellbar und absenkbar und verschiebbar ist, um die Dachöffnung freizulegen.

DE 3 545 015 C1 offenbart eine Schiebedachvorrichtung gemäß dem Oberbegriff des Anspruchs 1.

Der Erfindung liegt die Aufgabe zugrunde, eine eingangs genannte Fahrzeug-Schiebedachvorrichtung zu schaffen, die im Hinblick auf das Freilegen einer Dachöffnung verbessert ist.

Diese Aufgabe wird bei der eingangs genannten Fahrzeug-Schiebedachvorrichtung erfindungsgemäß dadurch gelöst, dass der Deckel am Deckelrahmen, der an den Führungen verschiebbar gelagert ist, lösbar angebracht und zum Freigeben einer Dachöffnung vom insbesondere in Schließstellung angeordneten Deckelrahmen entnehmbar ist.

Vorteilhafte Ausgestaltungen der Erfindung sind in den abhängigen Ansprüchen angegeben.

Bei der erfindungsgemäßen Fahrzeug-Schiebedachvorrichtung kann somit durch das Entfernen des Deckels vom Deckelrahmen in einfacher Weise eine Deckelrahmenöffnung oder Dachöffnung freigelegt werden. Dies ist dadurch möglich, dass die Deckeleinheit ausschließlich am Deckelrahmen gelagert ist und eine Verbindung des Deckels mit dem Deckelrahmen derart gebildet ist, dass der Deckel insbesondere ohne Werkzeuge oder Hilfsmittel einfach und schnell zu entnehmen ist.

Während bei üblichen manuell zu bedienenden bzw. zu verschiebenden Schiebedächern die Deckeleinheit einen Handgriff oder dergleichen im Bereich des Vorderrandes der Deckeleinheit aufweist, dessen Bewegungsweg beim Aufschieben der Deckeleinheit üblicherweise von einem hinten angrenzenden Dachbauteil begrenzt ist, wodurch auch eine maximale Öffnungsstellung und freilegbare Größe der Dachöffnung eingeschränkt ist, kann bei gänzlich entnommenem Deckel die gesamte Öffnungsfläche innerhalb des Deckelrahmens freigelegt werden.

Grundsätzlich kann vorgesehen sein, dass der Deckel in jeder Stellung des Deckelrahmens entnommen werden kann, beispielsweise wenn die Deckeleinheit ein Teil eines außengeführten Schiebedaches ist und beim Öffnen über das hinten angrenzende Dachbauteil verlagert wird. Zweckmäßigerweise ist aber der Deckelrahmen beim Entnehmen des Deckels in seiner Schließstellung angeordnet, so dass die freigelegte Deckelrahmenöffnung im wesentlichen mit der freilegbaren Dachöffnung der Schiebedachvorrichtung übereinstimmt und insbesondere kein vorderes Rahmenteil des Deckelrahmens sich durch die Dachöffnung erstreckt.

Der Deckelrahmen kann umlaufend gebildet sein oder er ist nur an den für die Lagerung erforderlichen Seiten oder Abschnitten vorhanden. Der Deckelrahmen muss eine Festigkeit und Steifigkeit aufweisen, die gemeinsam mit dem angebrachten Deckel die für die gesamte Deckeleinheit nötige Festigkeit bereitstellt. Wenn der Deckel abgenommen ist und der Deckelrahmen zweckmäßigerweise ruht und nicht verschoben wird, ist schon eine geringere Eigenfestigkeit ausreichend.

Zweckmäßigerweise ist der Deckel mittels einer Halteeinrichtung an dem Deckelrahmen lösbar angebracht. Die Halteeinrichtung ist z. B. eine Steckhalterung mit z. B. vier Steckteilen oder eine Einhängeeinrichtung mit Hakenelementen oder dergleichen. In jedem Fall ist die Halteeinrichtung einfach zu bedienen, wenn der Deckel entfernt wird und wenn er wieder angebracht wird. Die Halteeinrichtung kann auch eine Rasteinrichtung aufweisen, um den Deckel mit einer Rastkraft am Deckelrahmen zu halten.

In bevorzugter Gestaltung ist vorgesehen, dass der Deckel mittels einer Riegeleinrichtung am Deckelrahmen verriegelbar ist. Die Riegeleinrichtung stellt eine sichere Festlegung des Deckels am Deckelrahmen bereit, die insbesondere nur vom Fahrzeuginnenraum her zu betätigen ist, so dass der Deckel von Dritten von außen her nicht entfernt werden kann.

Zweckmäßigerweise enthält die Riegeleinrichtung zumindest ein am Deckelrahmen bewegbar gelagertes Riegelteil, das mit einem am Deckel angeordneten Deckeleingriffsteil verriegelbar ist. Hiermit ist eine Verriegelung mit wenigen Bauteilen in direktem Riegeleingriff möglich.

Gemäß einer besonders bevorzugten Ausgestaltung ist vorgesehen, dass das Riegelteil zwischen einer ersten Riegelstellung, in der es den Deckel am Deckelrahmen verriegelt, und einer zweiten Riegelstellung, in der es den Deckel zum Entfernen vom Deckelrahmen freigibt und insbesondere den Deckelrahmen an einem Schiebedachrahmen verriegelt, verstellbar ist. Die zwei Riegelstellungen ermöglichen eine betriebssichere Betätigung. Dadurch, dass der Deckelrahmen vor dem Entnehmen des Deckels an einem Schiebedachrahmen oder grundsätzlich an einem dachfesten Bauteil verriegelt wird, ist der Deckelrahmen stets gegen verschieben gesichert, auch wenn eine Verriegelungseinrichtung oder eine Rasteinrichtung der Deckeleinheit nicht in ihrer Schließ-, Riegel- oder Raststellung angeordnet ist.

Zweckmäßigerweise enthält das Riegelteil einen Riegelhaken für eine bzw. die erste Riegelstellung und einen Riegelhaken für eine bzw. die zweite Riegelstellung. Das Riegelteil kann verschwenkbar oder auch verschiebbar gelagert sein, um seine Riegelbewegungen auszuführen. Die Riegeleinrichtung bzw. das Riegelteil kann manuell zu bedienen sein, wobei ein Teil der Riegeleinrichtung oder das Riegelteil unmittelbar verstellt werden kann oder auch mittelbar, beispielsweise mittels eines weiteren Bedienteils oder mittels eines Werkzeugs.

Die Riegeleinrichtung kann am Vorderrand der Deckeleinheit bzw. am vorderen Deckelrahmenquerteil angeordnet sein, ist aber nicht auf diese Anordnung beschränkt. So kann die Riegeleinrichtung bzw. das zumindest eine Riegelteil auch an einem seitlichen Deckelrahmenlängsteil angeordnet sein.

Eine bevorzugte Gestaltung sieht vor, dass die Deckeleinheit mittels einer insbesondere am Deckel angeordneten Betätigungseinrichtung manuell verschiebbar ist. Grundsätzlich kann ein entnehmbarer Deckel auch bei einer Schiebedachvorrichtung mit einer motorisch angetriebenen Deckeleinheit vorgesehen sein. Das manuelle Verschieben der Deckeleinheit ermöglicht jedoch eine einfache und kostengünstige Bauweise. Wenn beim Entnehmen des Deckels auch die manuelle Betätigungseinrichtung entfernt wird, ist bei freigelegter Deckelrahmenöffnung der Fahrzeuginnenraum im Bereich um die Dachöffnung frei von solchen Teilen der Betätigungseinrichtung.

Es ist besonders bevorzugt, wenn die Betätigungseinrichtung als Baugruppe an dem Deckel angeordnet ist und die Baugruppe eine von der Betätigungseinrichtung betätigbare Verriegelungseinrichtung aufweist, die die Deckeleinheit in Schließstellung am Schiebedachrahmen verriegelt hält und zum Entfernen des Deckels vom Deckelrahmen entriegelt. Diese für den Betrieb der gesamten Deckeleinheit vorgesehene Verriegelungseinrichtung kann somit mit dem Deckel auch entfernt werden, da die oben genannte Riegeleinrichtung bzw. das Riegelteil die Riegelfunktion bei geschlossenem Deckelrahmen und entnommenem Deckel übernimmt.

Nachfolgend wird die Erfindung anhand eines Ausführungsbeispiels einer erfindungsgemäßen Fahrzeug-Schiebedachvorrichtung unter Bezugnahme auf die Zeichnung näher erläutert. Es zeigt:
- Fig. 1: in einer isometrischen Draufsicht ein Fahrzeugdach mit einer Schiebedachvorrichtung, deren Deckeleinheit in eine Teilöffnungsstellung bewegt ist;
- Fig. 2: in einer isometrischen Draufsicht die Deckeleinheit in der Stellung der Fig. 1 mit ihrer Lagerung an seitlichen vorderen und hinteren Führungsschienen;
- Fig. 3: in einer isometrischen Draufsicht gemäß Fig. 2 einen Deckelrahmen der Deckeleinheit mit seiner Lagerung an den seitlichen vorderen und hinteren Führungsschienen;
- Fig. 4: in einer isometrischen Draufsicht in Explosionsdarstellung die Schiebedachvorrichtung;

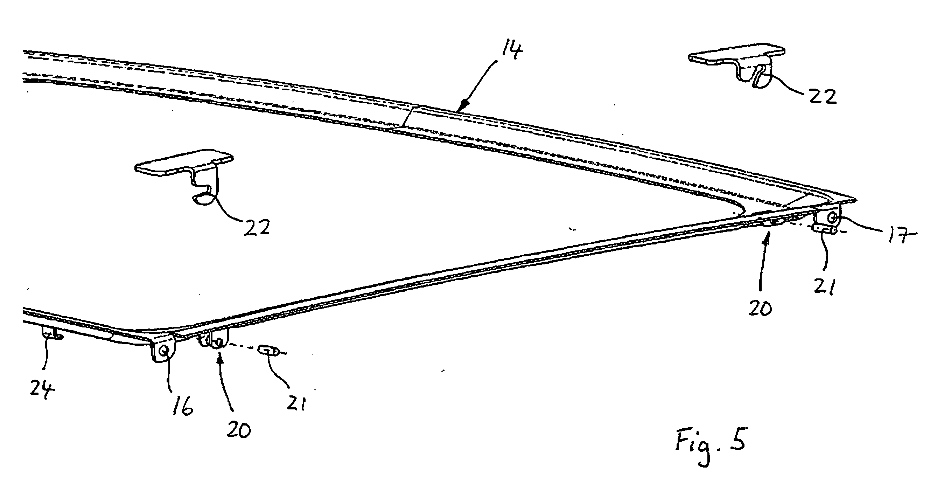

- Fig. 5: in einer isometrischen Draufsicht in Explosionsdarstellung einen linksseitigen Abschnitt des Deckelrahmens mit zwei Deckelhalterungen und zugeordneten rahmenseitigen Haltestiften;
- Fig. 6: in einer isometrischen Draufsicht eine Unterseite der Schiebedachvorrichtung, wobei die eine Betätigungseinrichtung aufweisende Deckeleinheit in Schließstellung angeordnet ist;
- Fig. 7: in einer isometrischen Draufsicht eine Unterseite der Betätigungseinrichtung;
- Fig. 8: in einer isometrischen Draufsicht die Oberseite der Betätigungseinrichtung mit einer Verriegelungseinrichtung und einer Rasteinrichtung;
- Fig. 9: in einer isometrischen Draufsicht gemäß Fig. 6 die Schiebedachvorrichtung, wobei die Betätigungseinrichtung bei geschlossener Deckeleinheit die Verriegelungseinrichtung entriegelt und die Rasteinrichtung in eine Bereitschaftsstellung verstellt hat;
- Fig. 10: in einer isometrischen Draufsicht gemäß Fig. 9 die Schiebedachvorrichtung, wobei die Deckeleinheit in eine hintere Offenstellung verschoben ist;
- Fig. 11: in einer isometrischen Draufsicht gemäß Fig. 10 die Schiebedachvorrichtung, wobei die Deckeleinheit in der hinteren Offenstellung mittels der Betätigungseinrichtung verriegelt ist;
- Fig. 12: in einer Draufsicht ein linker Endabschnitt der in Fig. 8 dargestellten Betätigungseinrichtung mit der Rasteinrichtung in einer ausgefahrenen Raststellung;
- Fig. 13: in einer Schnittansicht entlang der Linie A - A in Fig. 12 die Rasteinrichtung;
- Fig. 14: in einer Draufsicht gemäß Fig. 12 die Betätigungseinrichtung mit der Rasteinrichtung in einer Bereitschaftsstellung gemäß Fig. 9;
- Fig. 15: in einer Schnittansicht entlang der Linie B - B in Fig. 14 die Rasteinrichtung;
- Fig. 16: in einer Draufsicht gemäß Fig. 12 die Betätigungseinrichtung mit der Rasteinrichtung in einer Rückzugsstellung;
- Fig, 17: in einer Schnittansicht entlang der Linie C - C in Fig. 16 die Rasteinrichtung; und
- Fig. 18: in einer isometrischen Draufsicht gemäß Fig. 6 die Schiebedachvorrichtung mit einem in Schließstellung angeordneten Deckelrahmen der Deckeleinheit, von dem der am Deckelrahmen lösbar anbringbare Deckel entnommen worden ist.

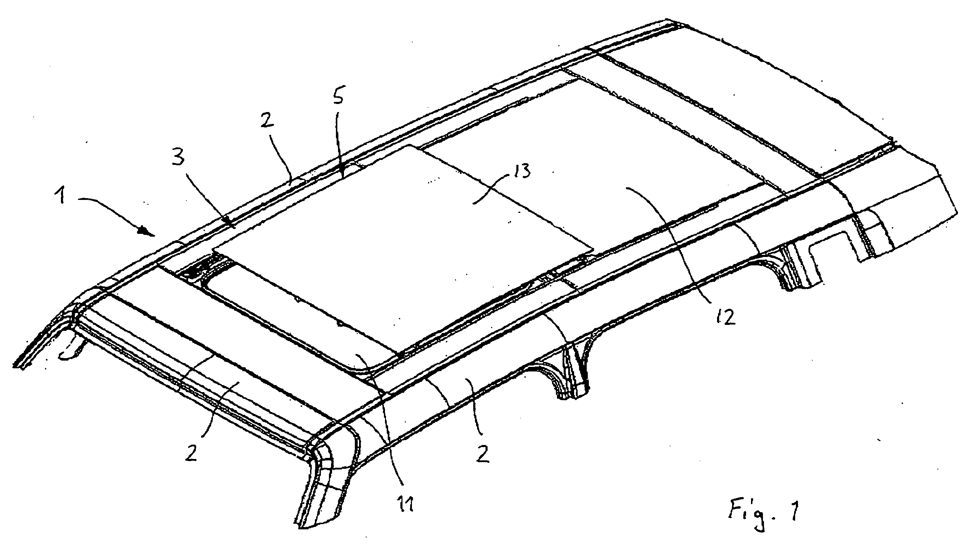

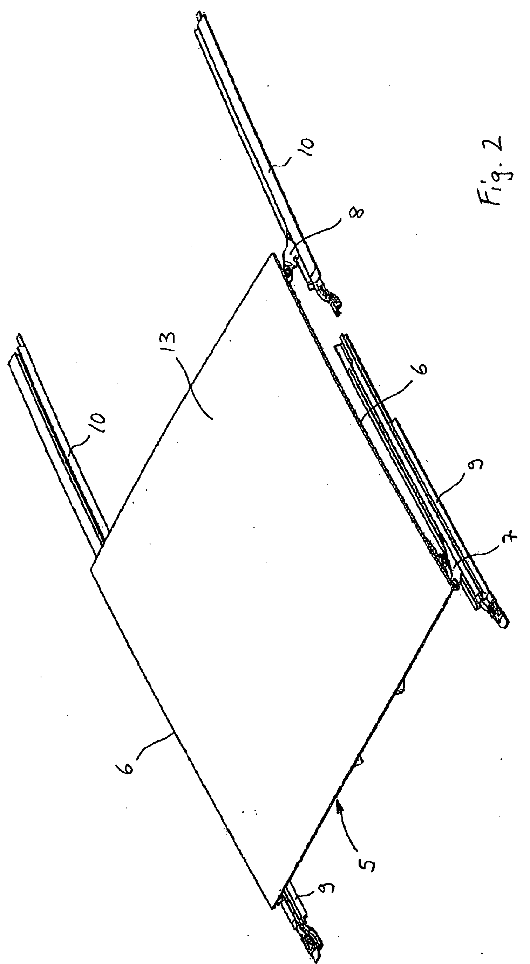

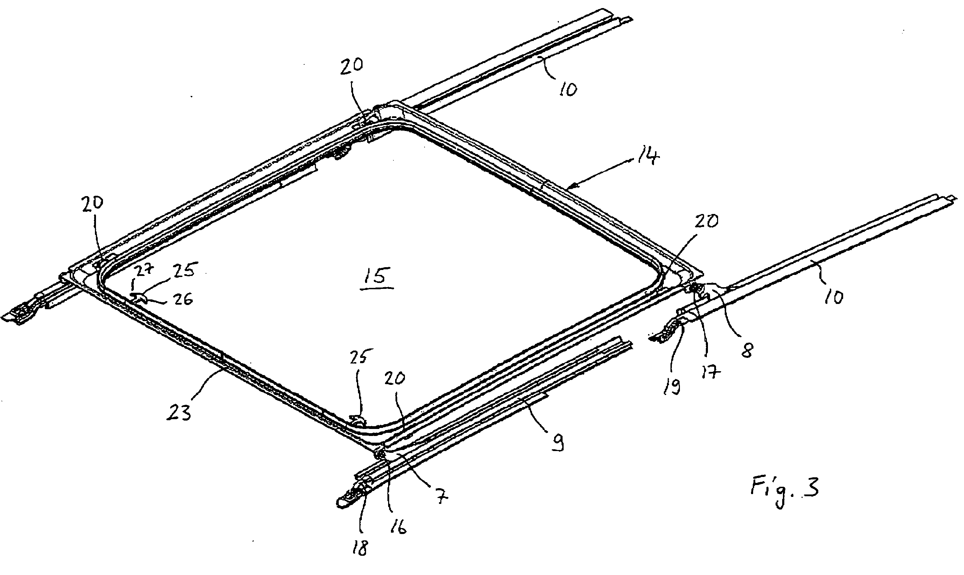

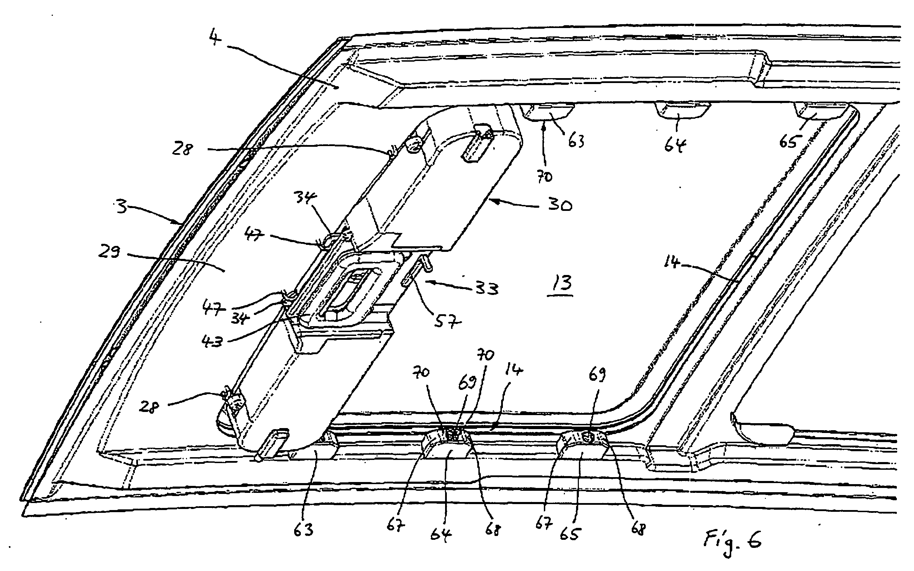

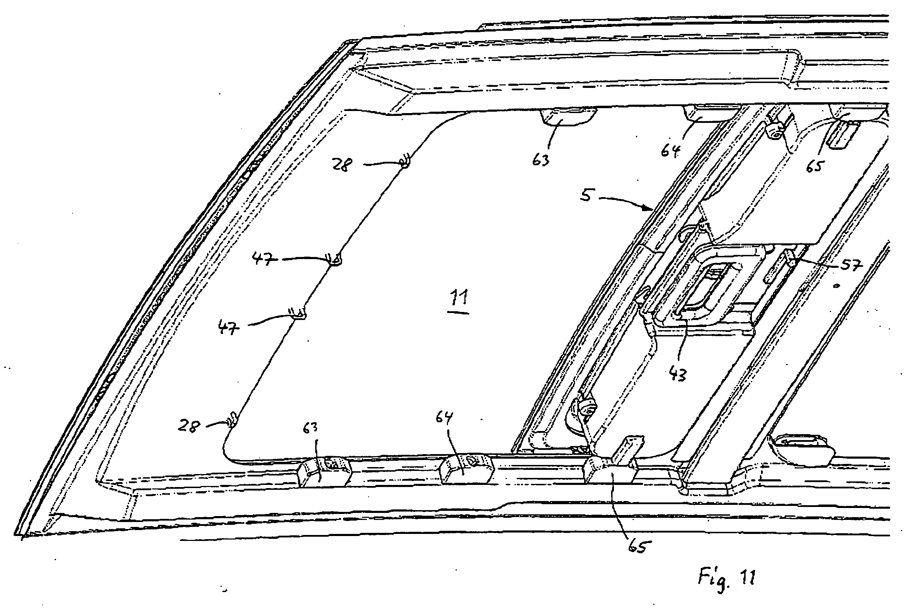

Ein Fahrzeug wie z. B. ein Personenkraftwagen umfasst ein Fahrzeugdach 1 (siehe Fig. 1) mit einer festen Dachrahmenstruktur 2 und einer Schiebedachvorrichtung 3, die als Baueinheit mittels eines Schlebedachrahmens 4 (siehe Fig. 6) an der Dachrahmenstruklur 2 angebracht ist. Die Schiebedachvorrichtung 3 enthält eine bewegbare Deckeleinheit 5, die im Bereich ihrer beiden Seitenränder 6 jeweils mittels eines vorderen Lager- und Ausstellhebels 7 und eines hinteren Lager- und Ausstellhebels 8 an einer vorderen Führungsschiene 9 bzw. einer hinteren Führungsschiene 10 verschiebbar gelagert ist (siehe insb. Fig. 2 bis 4). Die Deckeleinheit 5 ist zwischen einer Schließstellung, in der eine freilegbare Dachöffnung 11 verschlossen ist (Fig. 6), und einer Offenstellung mit maximal geöffneter Dachöffnung 11 (Fig. 11) verschlebbar, wobei bei einer Verlagerung in Zwischenstellungen mit teilweise freigelegter Dachöffnung 11 wie auch in Offenstellung die Lager- und Ausstellhebel 7 und 8 die Deckeleinheit 6 anheben und über ein sich an die Dachöffnung 11 bzw. die geschlossenen Deckeleinheit 5 nach hinten anschließendes hinteres Dachflächenteil 12 verlagern. Dieses Dachflächenteil 12 kann z. B. ein Teil eines festen Daches, eine eingesetzte feste Abdeckung oder auch ein weiterer bewegbarer Deckel sein. Das Verschieben der Deckeleinheit 5 entlang der Führungsschienen 9 und 10 erfolgt manuell, kann grundsätzlich aber auch mittels einer Antriebseinrichtung ausgeführt werden.

Die in der Beschreibung verwendeten Achsen- und Richtungsbezeichnungen wie z. B. "vorne", "hinten", "seitlich", "hoben" und "unten" beziehen sich auf ein dreidimensionales x-y-z Fahrzeug-Koordinatensystem. Das Ausführungsbeispiel zeigt eine Schiebedachvorrichtung mit einer in Fahrzeuglängsrichtung oder x-Richtung bzw. in Dachlängsrichtung verlagerbaren Deckeleinheit 5. Grundsätzlich kann jedoch eine erfindungsgemäße Schiebedachvorrichtung auch mit einer z. B. in Fahrzeugquerrichtung oder γ-Richtung bzw. In Dachquerrichtung bewegbar angeordneten Deckeleinheit vorgesehen sein.

Die Deckeleinheit 5 umfasst einen Deckel 13, z. B. einen Glasdeckel oder einen Kunststoffdeckel, und einen Deckelrahmen 14, an dem der Deckel 13 lösbar angebracht ist. Der Deckelrahmen 14 verläuft umlaufend unter dem Randbereich des Deckels 13 und ist somit im Ausführungsbeispiel entsprechend der Form des Deckels ein im wesentlichen rechteckiges Bauteil mit einer großen Deckelrahmenöffnung 15. Die vorderen und hinteren Lager- und Ausstellhebel 7 und 8 sind am Deckelrahmen 14 in vorderen und hinteren Schwenklagern 16 bzw. 17 schwenkbar angelenkt und mittels Führungs- und Steuerkulissen 18 und 19 der Führungsschienen 9 bzw. 10 anhebbar bzw. absenkbar und daran längs verfahrbar.

Der Deckelrahmen 14 weist vier Halterungen 20 mit jeweiligen Lagerstiften 21 auf, denen Haken 22 zugeordnet sind, die an der Unterseite des Deckels 13 angebracht sind und nach unten vorstehen. Der Deckel 13 wird an dem Deckelrahmen 14 lösbar angebracht, indem er mit den beiden vorderen Haken 22 an den vorderen Lagerstiften 21 und mit den hinteren Haken 22 an den hinteren Lagerstiften 21 eingehängt wird.

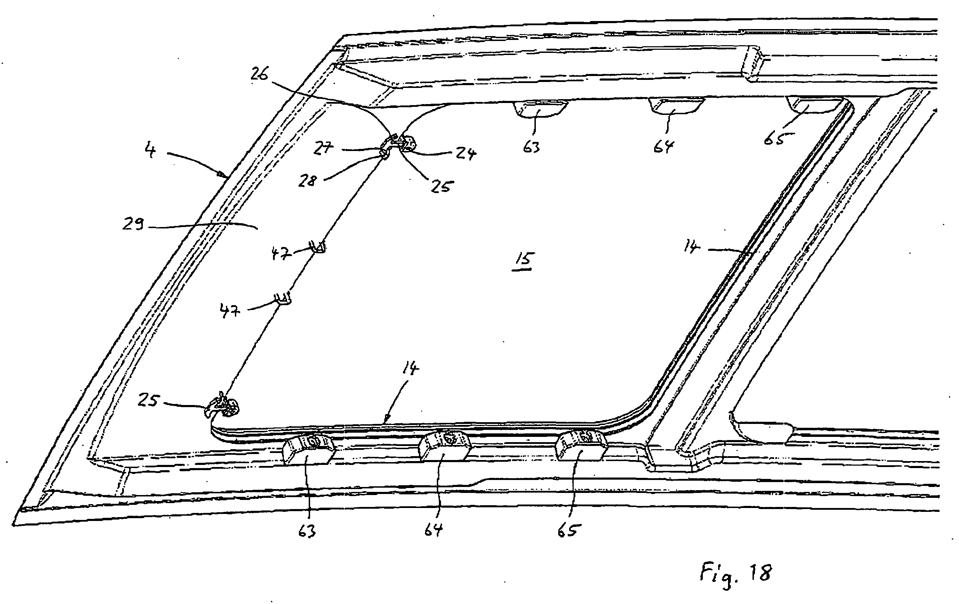

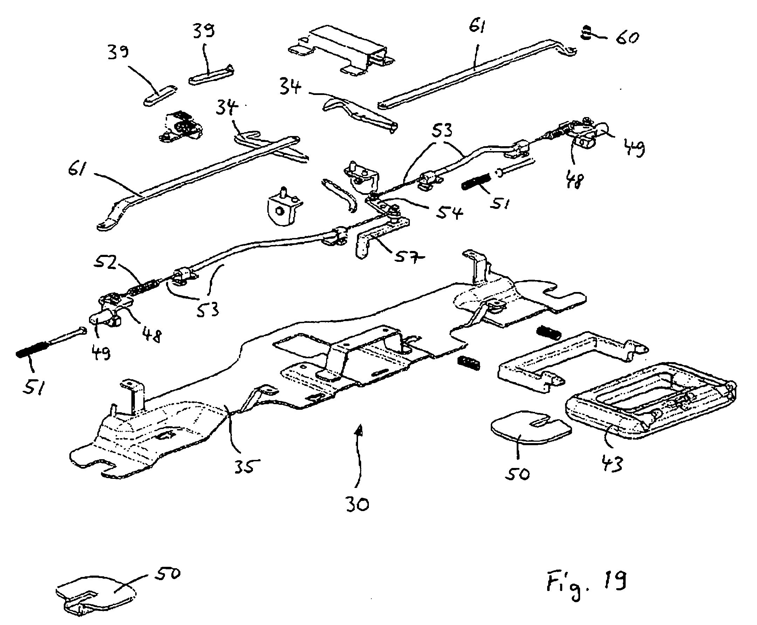

Der Deckelrahmen 14 enthält an seinem vorderen Deckelrahmenquerteil 23 zwei Lagerungen oder Lagerzapfen 24, die insbesondere nach unten vorstehen und jeweils ein Riegelteil 25 schwenkbar lagern. Jedes Riegelteil 25 ist ankerförmig mit zwei sich gegenüber liegenden Riegelhaken 26 und 27 gebildet und kann derart um den Lagerzapfen 24 verschwenkt werden, dass in einer ersten Riegelstellung der Riegelhaken 26 mit einem Eingriffsteil (nicht dargestellt, z. B. ein Zapfen oder ein Stift) des Deckels 13 in Eingriff ist und den Deckel 13 am Deckelrahmen 14 gesichert hält (siehe z. B. Fig. 6). Das Riegelteil 25 ist aus dieser ersten Riegelstellung in entgegen gesetzter Richtung in eine zweite Riegelstellung z. B. manuell verschwenkbar (siehe Fig. 18), in der der Riegelhaken 27 an einem Eingriffsteil 28 in Eingriff gebracht ist, das an einem vorderen Rahmenquerteil 29 des Schiebedachrahmens 4 angeordnet ist. In dieser zweiten Riegelstellung verriegelt somit das Riegelteil 25 den Deckelrahmen 14 in Schließstellung am Schiebedachrahmen 4 und löst gleichzeitig die Verriegelung des Deckels 13 am Deckelrahmen 14, so dass der Deckel 13 vom gesicherten nicht verschiebbaren Deckelrahmen 14 entnommen werden kann und die Deckelrahmenöffnung 15 die freigelegte Dachöffnung 11 bildet.

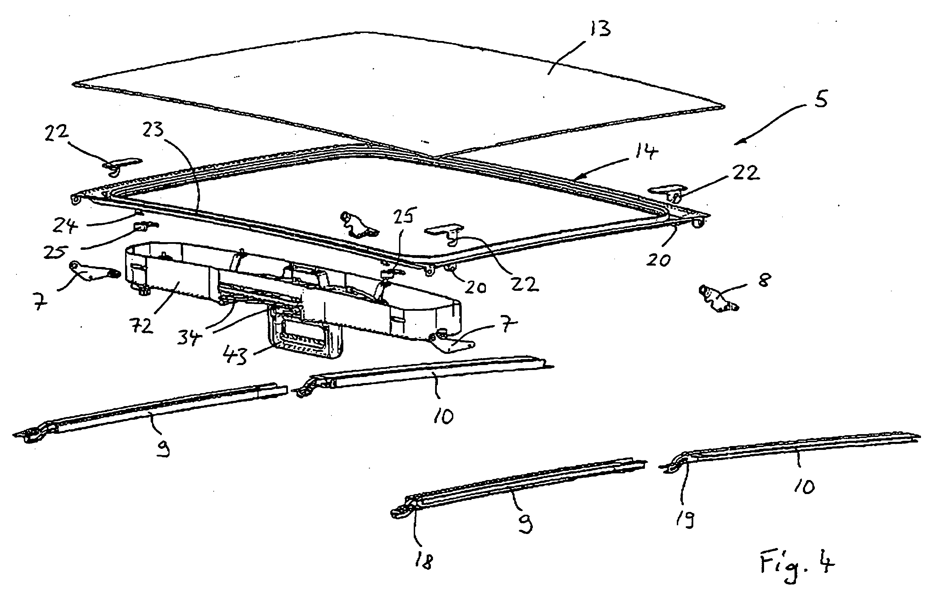

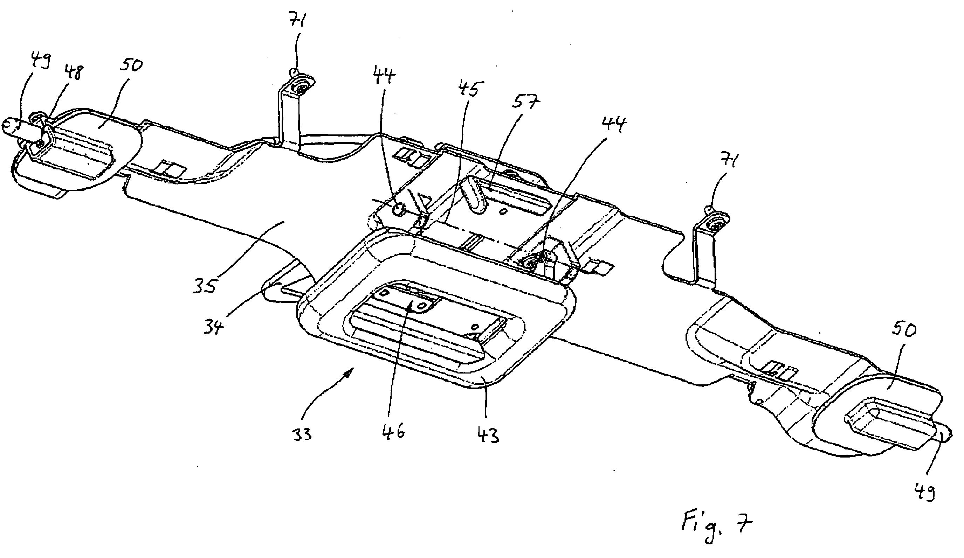

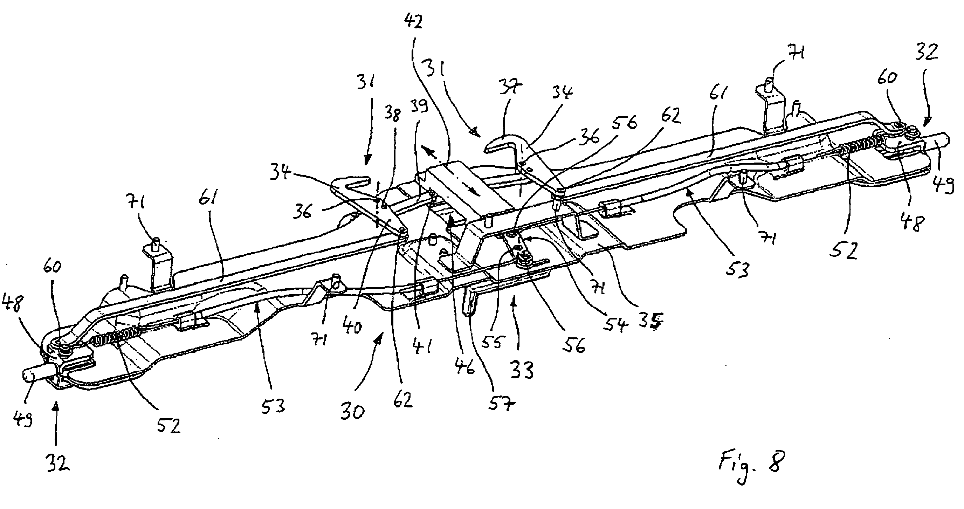

An der Unterseite des Deckels 13 ist eine Baugruppe 30 angeordnet (Fig. 4, 7 und 8), die eine Verriegelungseinrichtung 31, eine Rasteinrichtung 32 und eine Betätigungseinrichtung 33 zum Betätigen und Verschieben der Deckeleinheit 5 wie auch zum Betätigen der Verriegelungseinrichtung 31 und der Rasteinrichtung 32 aufweist. Die Verriegelungseinrichtung 31 weist zwei Riegelhaken 34 auf, die an einem ein- oder mehrteiligen Tragbauteil 35 der Baugruppe 30 mittels eines jeweiligen Schwenklagers 36 schwenkbar gelagert und beidseits bezüglich einer vertikalen Längsmittelebene durch die Baugruppe 30 bzw. die Deckeleinheit 5 und somit voneinander beabstandet angeordnet sind. Ein vorderes Hakenende 37 jedes Riegelhakens 34 ragt vom Schwenklager 36 nach vorne vor. Eine Anlenkung 38 eines Stellglieds 39 einer Betätigungsmechanik ist an einem bezüglich des Schwenklagers 36 hinteren Abschnitt 40 des Riegelhakens 34 angeordnet. Die Betätigung der zwei Riegelhaken 34 in gleichzeitiger gegenläufiger Verschwenkung erfolgt über die Längsverlagerung einer Innenanlenkung 41 des jeweiligen Stellglieds 39 in Dachlängsrichtung (in Fig. 8 durch Doppelpfeil 42 dargestellt) mittels eines Handgriffs 43, der mittels zweier Lager 44 um eine Querschwenkachse,45 an dem Tragbauteil 35 um etwa 90° verschwenkbar ist, und die zwischengeschaltete Betätigungsmechanik 46 in der Weise, dass bei gegen das Tragbauteil 35 eingeschwenkter horizontaler Ruhestellung des Handgriffs 43 (siehe die Fig. 6 und 7) die beiden Riegelhaken 34 in eine Riegelstellung gegeneinander eingeschwenkt sind und bei nach unten ausgeschwenkter Betriebsstellung des Handgriffs 43 (siehe die Fig. 4, 9 und 10) aus der Riegelstellung in eine Offenstellung ausgeschwenkt sind. In der Riegelstellung sind die Riegelhaken 34 bei geschlossener Deckeleinheit 6 (Fig. 6) an einem jeweils zugeordneten Riegeleingriffsteil 47 am vorderen Rahmenquertell 29 des Schiebdachrahmens 4 in Riegeleingriff, so dass die Deckeleinheit 5 nicht aus ihrer Schlleßstellung heraus bewegt werden kann.

Die Rasteinrichtung 32 enthält an den beiden seitlichen Enden des Tragbauteils 35 jeweils einen Raststifthalter 48 mit einem seitlich nach außen vorstehenden Raststift 49. Der Raststifthalter 48 ist an einer am Tragbauteil 35 angebrachten Lagereinheit 50 in Querrichtung oder y-Richtung verschiebbar gelagert und mittels einer Druckfeder 51, die in einer Ausnehmung der Lagereinheit 50 aufgenommen ist, nach außen in eine äußere Raststellung vorgespannt. Jeder Raststifthalter 48 ist über einen eine Feder 52 enthaltenden Bowdenzug 53 mit einem Schwenkhebel 54 verbunden, der um eine am Tragbauteil 35 zentral angeordneten Schwenkachse 55 schwenkbar gelagert ist und die sich bezüglich der Schwenkachse 55 gegenüberliegenden und hiervon gleichmäßig beabstandeten Anbindungspunkte 56 der beiden Bowdenzüge 53 aufweist.

Ein Schiebetaster 57 der Betätigungseinrichtung 33 ist an der Unterseite des Tragbauteils 35 in der Nähe des Handgriffs 43 angeordnet und in Querrichtung oder y-Richtung am Tragbauteil 35 verschiebbar gelagert. Der Schiebetaster 57 ist an den einen Arm des Schwenkhebels 54 beabstandet zur Schwenkachse 55 angekoppelt, z. B. mittels einer Stift- oder Bolzenverbindung an dem Anbindungspunkt 56 des einen Bowdenzugs 53. Wenn der Schiebetaster 57 aus der in Fig. 8 dargestellten Stellung manuell in Quer- oder y-Richtung nach rechts verschoben wird, werden über den dabei verschwenkenden Schwenkhebel 54 und die beiden Bowdenzüge 53 die Raststifthalter 48 mit den Raststiften 49 in synchroner Rückzugsbewegung gegen die Kraft der Druckfedern 51 einwärts gezogen.

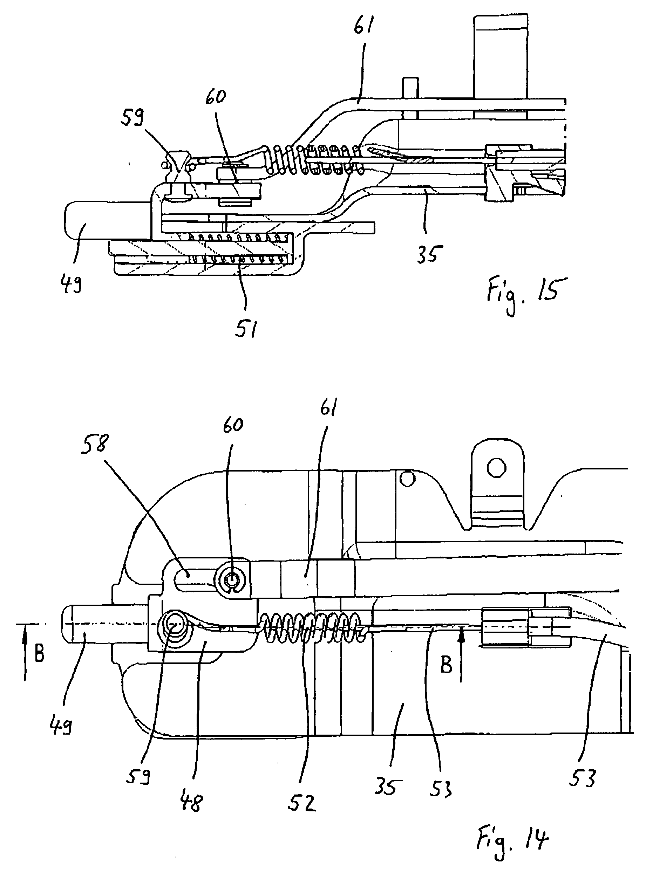

Der Raststifthalter 48 weist ein Langloch 58 auf (siehe Fig. 14), das sich neben der Anbindung 59 des Bowdenzugs 53 bzw. dessen Feder 52 in Bewegungsrichtung des Raststifthalters 48 bzw. in y-Richtung erstreckt. Ein Lagerstift 60 ist in dem Langloch 58 verschiebbar aufgenommen. Der Lagerstift 60 ist an dem äußeren Ende einer Stellstange 61 befestigt und hält als Gleitlagerung die Stellstange 61 relativ zum dem Raststifthalter 48 beweglich, wobei der Bewegungsweg durch die Länge des Langloches 58 begrenzt ist. Die Stellstange 61 erstreckt sich einwärts bis zu dem Riegelhaken 34 und ist mit diesem mittels eines Verbindungsgelenks 62 verbunden, das am Hinterende seines hinteren Abschnitts 40 angeordnet ist.

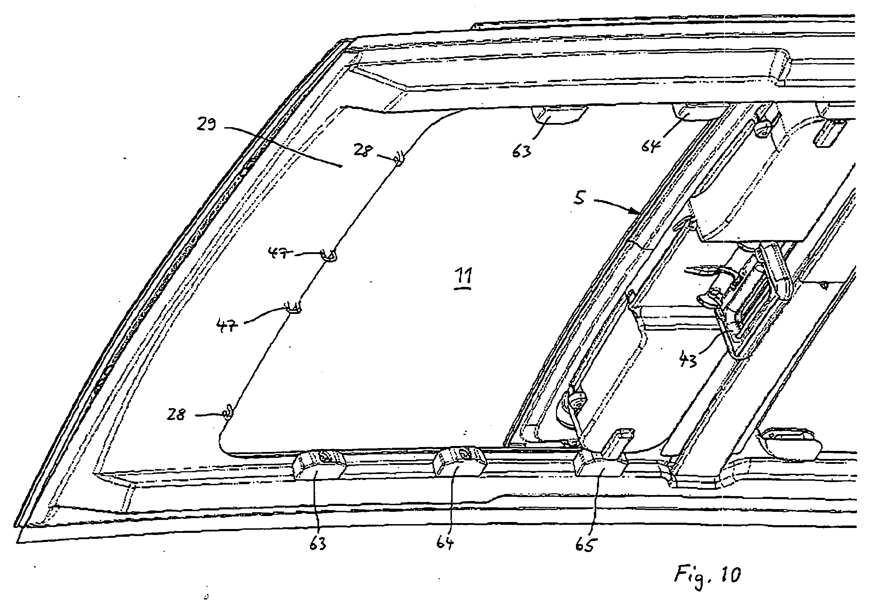

Die Raststifte 49 sind zum Rasteingriff an beispielsweise drei Rasteingriffsteilen 63, 64 und 65 vorgesehen, die jeweils an seitlichen Längsrahmenteilen 66 des Schiebedachrahmens 4 entlang des Bewegungsweges der Deckeleinheit 5 angeordnet sind. Jedes Rasteingriffsteil 63, 64 und 65 weist eine vordere Rastschräge 67 und eine hintere Rastschräge 68 auf, auf denen der Raststift 49 während der Verschiebebewegung der Deckeleinheit 5 entsprechend der Bewegungsrichtung der Deckeleinheit 5 gleiten und sich dabei in Quer- oder y-Richtung einwärts wie auch auswärts bewegen kann. Des weiteren enthält jedes Rasteingriffsteil 63, 64 und 65 eine insbesondere zylindrische Rastausnehmung 69 in einer Gleitfläche 70 zwischen den beiden Rastschrägen 67 und 68. Die Rastausnehmung 69 ist derart gebildet, dass der über die Gleitfläche 70 gleitende Raststift 49 aufgrund der Vorspannung durch die Druckfeder 51 in die Rastausnehmung 69 ausfahren kann. In seiner ausgefahrenen Raststellung blockiert der Raststift 49 die Deckeleinheit 5 in dieser Stellung (siehe z. B. Fig. 10 und 11), auch wenn die Deckeleinheit 5 z. B. manuell weiter verschoben werden soll.

Nachfolgend wird die Funktionsweise der Schiebedachvorrichtung beschrieben.

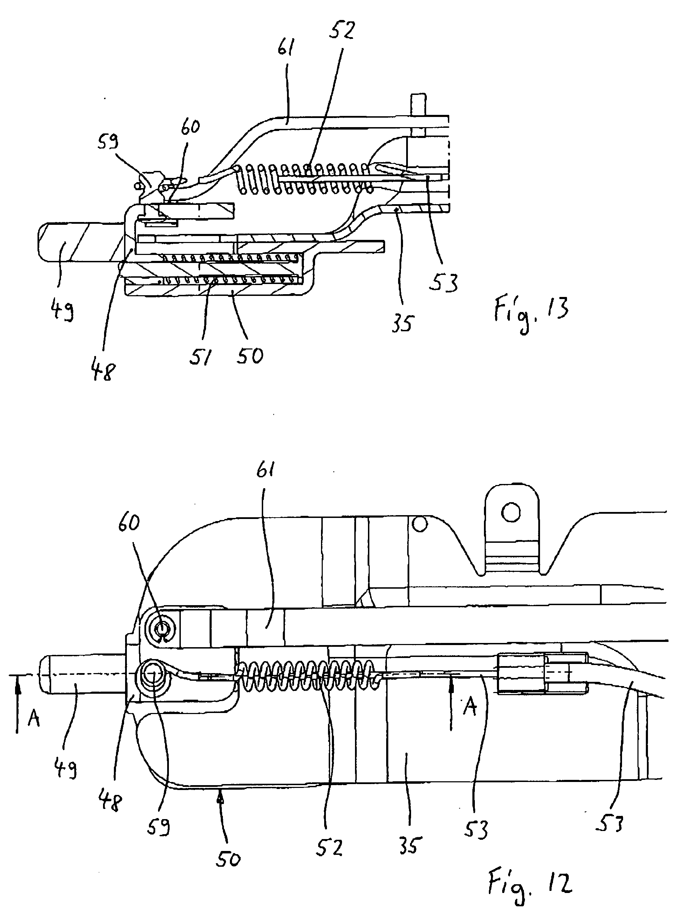

In Schließstellung der Deckeleinheit 5 (siehe Fig. 6) verschließt der Deckel 13 die Dachöffnung 11 bündig mit der umliegenden Dachfläche. Der Handgriff 43 ist in seine Ruhestellung verschwenkt und über die Betätigungsmechanik 46 sind die beiden Riegelhaken 34 in ihre Riegelstellungen mit Riegeleingriff an den Riegeleingriffsteilen 47 verschwenkt. Die Stellstangen 61 sind über die Riegelhaken 43 nach außen bewegt worden und drücken im Zwangseingriff am Außenende des Langloches 58 den Raststifthalter 48 mit dem Raststift 49 in eine maximale äußere Stellung (siehe Stellung der Fig. 12 und 13, Raststift in Fig. 6 nicht dargestellt). In dieser Stellung hat der Raststifthalter 48 Ober den Bowdenzug 53 den Schwenkhebel 54 und/oder den Schiebetaster 57 gegen einen Anschlag bewegt und darüber hinaus die Feder 52 unter Spannungsaufbau expandiert. In dieser Stellung ist gemäß dem Ausführungsbeispiel ein Rasteingriff mit Rasteingriffsteilen nicht vorgesehen. Der Deckel 13 ist am Deckelrahmen 14 mittels der Haken 20 an den Halterungen 22 festgelegt und mittels der zurückgeschwenkten Riegelteile 25 und den Riegelhaken 26 mit Eingriffsteilen des Deckels 13 in Eingriff, so dass der Deckel 13 am Deckelrahmen 14 gesichert gehalten ist.

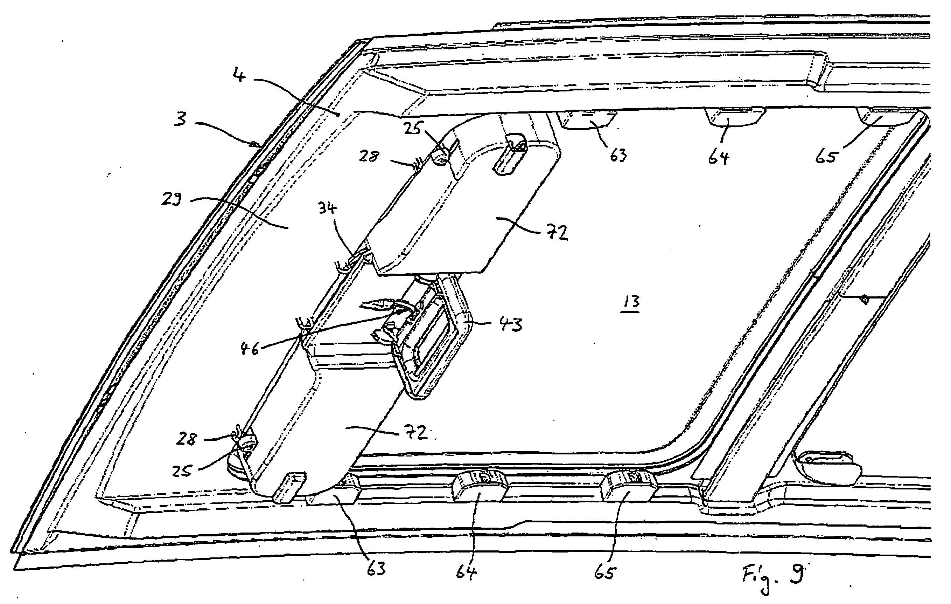

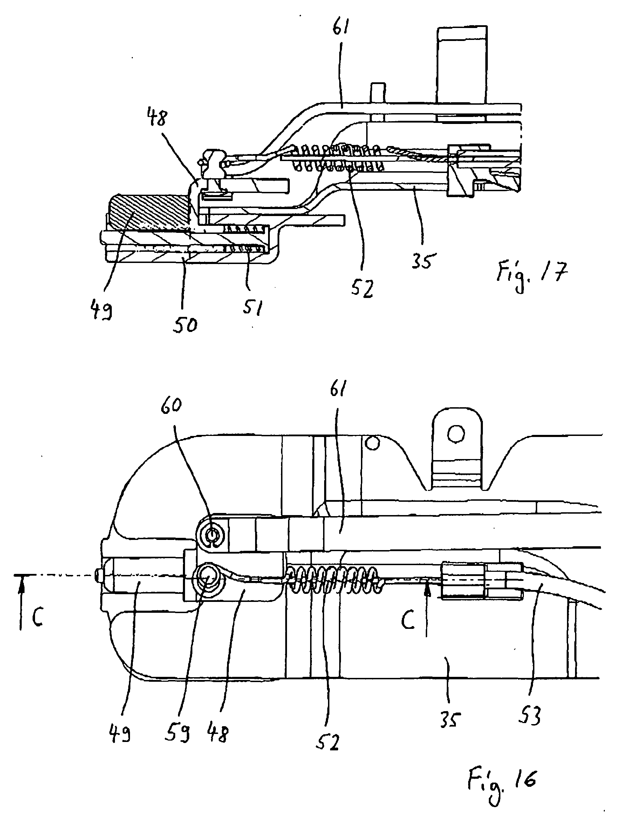

Zum Öffnen der Schiebedachvorrichtung 3 wird zunächst der Handgriff 43 nach unten geschwenkt (siehe Fig. 9), wodurch die Riegelhaken 34 in ihre Offenstellung verschwenkt werden und die Deckeleinheit 5 zum Längsverschieben entlang der Führungsschienen 9 und 10 freigeben. Außerdem werden die Stellstangen 61 bis in die in den Fig. 14 und 15 dargestellte Stellung nach innen gezogen, wobei anfangs der Raststifthalter 48 durch die Kraft der gespannten Feder 52 dem Lagerstift 60 der Stellstange 61 folgt, der am Außenende des Langloches 58 anliegt, bis sich die Feder 52 auf ihre ungedehnte und federkraftfreie Länge verkürzt hat und keine Rückzugskraft auf den Raststifthalter 48 ausübt. Der Lagerstift 60 der Stellstange 61 befindet sich dann am Innenende des Langloches 58 des Raststifthalters 48, der durch die Druckfeder 51, deren Federkraft geringer ist als die Federkraft der Feder 52 des Bowdenzugs 53, weiterhin nach außen vorgespannt ist. In dieser Stellung ist der Raststift 49 in einer Bereitschaftsstellung, in der er beim rückwärts gerichteten manuellen Verschieben der Deckeleinheit 5 in Kontakt mit der vorderen Rastschräge 67 kommt und von dieser gegen die Kraft der Druckfeder 51 bis auf das Niveau der Gleitfläche 70 einwärts verlagert wird. Der Raststifthalter 48 bewegt sich dabei relativ zum ruhenden Lagerstift 60, der im Langloch 58 wieder gegen dessen Außenende hin bewegt wird (Stellung des Raststifthalters 48 kurz vor der in den Fig. 16 und 17 dargestellten Einfahrstellung). Der Bowdenzug 53 bildet mit der entspannten Feder 52 eine weitgehend druckstelfe Einheit und wird vom Raststifthalter 48 einwärts verlagert, wodurch er den Schwenkhebel 54 verschwenkt und der Schiebetaster 57 gleichfalls verschoben wird.

Bei der weiteren Verschiebebewegung der Deckeleinheit 5 erreicht der Raststift 49 die Rastausnehmung 69, in die er durch die Federkraft der Druckfeder 51 ausgefahren und hineingedrückt wird. Die Rasteinrichtung 32 nimmt dabei wieder die in den Fig. 14 und 15 dargestellte Stellung ein und der Raststift 49 blockiert in seiner ausgefahrenen Raststellung die Deckeleinheit 5 gegen weiteres Verschieben (Stellung gemäß den Fig. 10 und 11). Über den gleichfalls verlagerten Bowdenzug 53 ist der Schwenkhebel 54 wieder zurückgeschwenkt worden und der Schiebetaster 57 befindet sich ebenfalls wieder in seiner Ausgangsstellung.

Um die Deckeleinheit 5 mittels des Handgriffs 43 weiter zu verschieben, wird der nahe dem Handgriff 43 angeordnete Schiebetaster 57 manuell betätigt bzw. verschoben, wodurch Ober den verschwenkenden Schwenkhebel 54 und den Bowdenzug 53 mit der Feder 52 der Raststift 49 aus der Rastausnehmung 69 herausgezogen wird. Nachdem der Rasteingriff beendet ist, kann die Deckeleinheit 5 mittels des Handriffs 43 weiter verschoben werden. Die Betätigung des Schiebetasters 57 kann beendet werden.

Der beschriebene Vorgang wiederholt sich an jedem der folgenden Rasteingriffsteile 64 und 65. Um die Deckeleinheit 5 ohne die beschriebene Bewegungsunterbrechung bzw. Verrastung an zumindest einem der Rasteingriffsteile 63, 64 oder 65 in die Offenstellung gemäß Fig. 10 und 11 zu verfahren, kann während der Öffnungsbewegung schon beim Erreichen des ersten Rasteingriffsteils 63 der Schiebetaster 57 vollständig betätigt bzw. verschoben werden und in dieser Stellung gehalten werden, so dass die Rasteinrichtung 32 und insbesondere der Raststift 49 die in den Fig. 16 und 17 dargestellte zurückgezogene Stellung einnimmt, in der keine Rastung erfolgen kann.

Zum vollständigen Freilegen der Dachöffnung 11 wird die Deckeleinheit 5 in die in Fig. 10 dargestellte Stellung verschoben. Wenn sich der Schiebetaster 57 ohne manuelle Betätigung in seiner Ausgangsstellung befindet, kann der Raststift 49 in die Rastausnehmung 69 des hinteren Rasteingriffsteils 65 ausfahren und damit die Deckeleinheit 5 in ihrer Offenstellung verrastet halten. Beim Einschwenken des Handgriffs 43 in seine horizontale Ruhestellung (Fig. 11) werden über die verschwenkenden Riegelhaken 34 und die Stellstangen 61 die beiden Raststifte 49 in ihre maximale Raststellung ausgefahren (Stellung gemäß Fig. 12 und 13).

Zum zumindest teilweisen Schließen der Dachöffnung 11 wird der Handgriff 43 herabgeschwenkt und mittels des Handgriffs 43 wird die Deckeleinheit 5 nach vorne verschoben. Wenn der Schiebetaster 57 zunächst nicht betätigt wird, wird an dem hinteren Rasteingriffsteil 65 eine Verrastung erfolgen, die durch Betätigung des Schiebetaster 57 in der beschriebenen Weise aufgehoben werden kann. Wenn die Deckeleinheit 5 in ununterbrochener Schiebebewegung in ihre vordere Schließstellung bewegt werden soll, so wird sogleich der Schiebetaster 57 betätigt und der Raststift 49 in seiner zurückgezogenen Stellung gehalten.

Die Rasteinrichtung 32 ermöglicht auch eine Blockierung der Deckeleinheit 5, wenn diese in einer Teilöffnungsstellung ohne Verrastung angeordnet ist und eine hohe Beschleunigung wie z. B. bei einem Auffahrunfall auftritt, die die Deckeleinheit 5 ruckartig bewegt. Beim Erreichen des nächsten Rasteingriffsteils wird eine Verrastung erfolgen, die eine Weiterbewegung der Deckeleinheit 5 verhindert.

Das Freilegen einer Dachöffnung kann auch durch Entfernen des Deckels 13 von dem in Schließstellung angeordneten Deckelrahmen 14 erfolgen. Ausgehend von der Schließstellung der Deckeleinheit 5 gemäß Fig. 6 werden die beiden Riegelteile 25 aus dem Riegeleingriff am Deckel 13 gelöst und in Riegeleingriff am Eingriffsteil 28 des vorderen Rahmenquerteils 29 des Schiebedachrahmens 4 gebracht bzw. insbesondere manuell verschwenkt. Der Deckelrahmen 14 ist somit am Schiebedachrahmen 4 festgelegt und kann nicht mehr an den Führungen 9 und 10 verlagert werden. Beim Herabschwenken des Handgriffs 43 werden die Riegelhaken 34 aus ihrer Verriegelung an den Riegeleingriffsteilen 47 gelöst.

Damit kann der Deckel 13 vom Deckelrahmen 14 abgenommen werden. Die gesamte Baugruppe 30 zur Betätigung, Verriegelung und Rastung wird gleichfalls mit dem Deckel 13 entfernt, so dass die freigelegte Deckelrahmenöffnung 15 ebenfalls eine vergleichsweise große Dachöffnung bereitstellt.

Das Tragbauteil 35 der Baugruppe 30 ist über mehrere Verbindungen wie z. B. Schraubverbindungen 71 mit dem Deckel 13 an seiner Unterseite verbunden. Der Deckel 13 ist z. B. aus einem Kunststoffmeterial oder einem Kompositmaterial hergestellt, an dem Schraubverbindungen möglich sind. Die Baugruppe 30 kann eine ein- oder mehrteilige Abdeckung 72 aufweisen.

Die Feder 52 am Bowdenzug 53 ist zum Toleranzausgleich in der mechanischen Kette zwischen dem Raststifthalter 48 und dem Schwenkhebel 54 vorgesehen.

Die in der Beschreibung und anhand der Ausführungsbeispiele sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Fahrzeugdach | 28 | Eingriffsteil |
| 2 | Dachrahmenslruktur | 29 | vorderes Rahmenquerteil |
| 3 | Schiebedachvorrichtung | 30 | Baugruppe |
| 4 | Schiebedachrahmen | 31 | Verriegelungseinrichtung |
| 5 | Deckeleinheit | 32 | Rasteinrichtung |
| 6 | Seitenrand | 33 | Betätigungseinrichtung |
| 7 | vorderer Lager- und Ausstellhebel | 34 | Riegelhaken |
| | | 35 | Tragbauteil |
| 8 | hinterer Lager- und Ausstellhebel | 36 | Schwenklager |
| | | 37 | vorderes Hakenende |
| 9 | vordere Führungsschiene | 38 | Anlenkung |
| 10 | hintere Führungsschiene | 39 | Stellglied |
| 11 | Dachöffnung | 40 | hinterer Abschnitt |
| 12 | hinteres Dachflächenteil | 41 | Innenanlenkung |
| 13 | Deckel | 42 | Doppelpfeil |
| 14 | Deckelrahmen | 43 | Handgriff |
| 15 | Deckelrahmenöffnung | 44 | Lager |
| 16 | vorderes Schwenklager | 45 | Querschwenkachse |
| 17 | hinteres Schwenklager | 46 | Betätigungsmechanik |
| 18 | Führungs- und Steuerkulisse | 47 | Riegeieingriffsteil |
| 19 | Führungs- und Steuerkulisse | 48 | Raststifthalter |
| 20 | Halterung | 49 | Raststift |
| 21 | Lagerstift | 50 | Lagereinheit |
| 22 | Haken | 51 | Druckfeder |
| 23 | vorderes Deckelrahmenquerteil | 52 | Feder |
| | | 53 | Bowdenzug |
| 24 | Lagerzapfen | 54 | Schwenkhebel |
| 25 | Riegelteil | 55 | Schwenkachse |
| 26 | Riegelhaken | 56 | Anbindungspunkt |
| 27 | Riegelhaken | 57 | Schiebetaster |
| 58 | Langloch | 66 | Längsrahmenteil |
| 59 | Anbindung | 67 | vordere Rastschräge |
| 60 | Lagerstift | 68 | hintere Rastschräge |
| 61 | Stellstange | 69 | Rastausnehmung |
| 62 | Verbindungsgelenk | 70 | Gleitfläche |
| 63 | Rasteingriffsteil | 71 | Schraubverbindung |
| 64 | Rasteingriffsteil | 72 | Abdeckung |
| 65 | Rasteingriffsteil | | |

## Patentansprüche

1. Fahrzeug-Schiebedachvorrichtung (3) mit einer einen Deckel (13) und einen Deckeirahmen (14) aufweisenden Deckeleinheit (5), die mittels einer Lagereinrichtung (7, 8) an Führungen (9, 10) der Schiebedachvorrichtung (3) verschiebbar gelagert und zwischen einer eine Dachöffnung (11) abdeckenden Schließstellung und zumindest einer Offenstellung verstellbar ist,
**dadurch gekennzeichnet,**
**dass** der Deckel (13) am Deckelrahmen (14), der an den Führungen (9, 10) verschiebbar gelagert ist, lösbar angebracht und zum Freigeben einer Dachöffnung (15) vom insbesondere in Schließstellung angeordneten Deckelrahmen (14) entnehmbar ist.

2. Schiebedachvorrichtung nach Anspruch 1,
**dadurch gekennzeichnet, dass** der Deckel (13) mittels einer Halteeinrichtung (20, 22) an dem Deckelrahmen (14) lösbar angebracht ist.

3. Schiebedachvorrichtung nach Anspruch 1 oder 2,
**dadurch gekennzeichnet, dass** der Deckel (13) mittels einer Riegeleinrichtung (25) am Deckelrahmen (14) verriegelbar Ist.

4. Schiebedachvorrichtung nach Anspruch 3,
**dadurch gekennzeichnet, dass** die Riegeleinrichtung (25) zumindest ein am Deckelrahmen (14) bewegbar gelagertes Riegelteil (25) aufweist, das mit einem am Deckel (13) angeordneten Deckeleingriffsteil verriegelbar ist.

5. Schiebedachvorrichtung nach Anspruch 4,
**dadurch gekennzeichnet, dass** das Riegelteil (25) zwischen einer ersten Riegelstellung, in der es den Deckel (13) am Deckelrahmen (14) verriegelt, und einer zweiten Riegelstellung, in der es den Deckel (13) zum Entfernen vom Deckelrahmen (14) freigibt und insbesondere den Deckelrahmen (14) an einem Schiebedachrahmen (4) verriegelt, verstellbar ist.

6. Schiebedachvorrichtung nach Anspruch 4 oder 5,
**dadurch gekennzeichnet, dass** das Riegelteil (25) einen Riegelhaken (26) für eine bzw. die erste Riegelstellung und einen Riegelhaken (27) für eine bzw. die zweite Riegelstellung aufweist.

7. Schiebedachvorrichtung nach einem der Ansprüche 3 bis 6,
**dadurch gekennzeichnet, dass** die Riegeleinrichtung bzw. das Riegelteil (25) manuell unmittelbar oder mittelbar bedienbar ist.

8. Schiebedachvorrichtung nach einem der Ansprüche 3 bis 7,
**dadurch gekennzeichnet, dass** die Riegeleinrichtung (25) am Vorderrand der Deckeleinheit (5) bzw. am vorderen Deckelrahmenquerteil (23) angeordnet ist.

9. Schiebedachvorrichtung nach einem der Ansprüche 1 bis 8,
**dadurch gekennzeichnet, dass** die Deckeleinheit (5) mittels einer insbesondere am Deckel (13) angeordneten Betätigungseinrichtung (33, 43) manuell verschiebbar ist.

10. Schiebedachvorrichtung nach Anspruch 9,
**dadurch gekennzeichnet, dass** die Betätigungseinrichtung als Baugruppe (30) an dem Deckel (13) angeordnet ist und die Baugruppe (30) eine von der Betätigungseinrichtung betätigbare Verriegelungseinrichtung (31) aufweist, die die Deckeleinheit (5) in Schließstellung am Schiebedachrahmen (4) verriegelt hält und zum Entfernen des Deckels (13) vom Deckelrahmen (14) entriegelt.

## Claims

1. Vehicle sliding roof device (3) with a cover unit (5) which has a cover (13) and a cover frame (14), is mounted displaceably by means of a bearing device (7, 8) on guides (9, 10) of the sliding roof device (3) and is adjustable between a closed position covering a roof opening (11) and at least one open position, **characterized in that** the cover (13) is attached releaseably to the cover frame (14), which is mounted displaceably on the guides (9, 10), and, for release of a roof opening (15), is removable from the cover frame (14) arranged in particular in the closed position.

2. Sliding roof device according to Claim 1, **characterized in that** the cover (13) is attached releaseably to the cover frame (14) by means of a holding device (20, 22).

3. Sliding roof device according to Claim 1 or 2, **characterized in that** the cover (13) is lockable to the roof frame (14) by means of a locking device (25).

4. Sliding roof device according to Claim 3, **characterized in that** the locking device (25) has at least one locking part (25) which is mounted moveably on the roof frame (14) and is lockable to a cover engagement part arranged on the cover (13).

5. Sliding roof device according to Claim 4, **characterized in that** the locking part (25) is adjustable between a first locking position, in which the locking part locks the cover (13) to the cover frame (14), and a second locking position, in which said locking part releases the cover (13) for removal from the cover frame (14) and in particular locks the cover frame (14) to a sliding roof frame (4).

6. Sliding roof device according to Claim 4 or 5, **characterized in that** the locking part (25) has a locking hook (26) for a or the first locking position and a locking hook (27) for a or the second locking position.

7. Sliding roof device according to one of Claims 3 to 6, **characterized in that** the locking device or the locking part (25) is directly or indirectly operable manually.

8. Sliding roof device according to one of Claims 3 to 7, **characterized in that** the locking device (25) is arranged on the front edge of the cover unit (5) or on the front cover frame transverse part (23).

9. Sliding roof device according to one of Claims 1 to 8, **characterized in that** the cover unit (5) is displaceable manually by means of an actuating device (33, 43) arranged in particular on the cover (13).

10. Sliding roof device according to Claim 9, **characterized in that** the actuating device is arranged as an assembly (30) on the cover (13) and the assembly (30) has a catch device (31) which is actuable by the actuating device, keeps the cover unit (5) locked to the sliding roof frame (4) in the closed position and unfastens for removing the cover (13) from the cover frame (14).

## Revendications

1. Dispositif de toit coulissant de véhicule (3) comprenant une unité de couvercle (5) présentant un couvercle (13) et un cadre de couvercle (14), laquelle est supportée de manière déplaçable au moyen d'un dispositif de palier (7, 8) sur des guides (9, 10) du dispositif de toit coulissant (3) et peut être déplacée entre une position de fermeture recouvrant une ouverture de toit (11) et au moins une position d'ouverture,
**caractérisé en ce que**
le couvercle (13) est monté de manière amovible sur le cadre de couvercle (14) qui est supporté de manière déplaçable sur les guides (9, 10) et peut être enlevé du cadre de couvercle (14) notamment disposé dans la position de fermeture pour libérer une ouverture de toit (15).

2. Dispositif de toit coulissant selon la revendication 1,
**caractérisé en ce que** le couvercle (13) est monté de manière amovible sur le cadre de couvercle (14) au moyen d'un dispositif de retenue (20, 22).

3. Dispositif de toit coulissant selon la revendication 1 ou 2,
**caractérisé en ce que** le couvercle (13) peut être verrouillé au cadre de couvercle (14) au moyen d'un dispositif de verrouillage (25).

4. Dispositif de toit coulissant selon la revendication 3,
**caractérisé en ce que** le dispositif de verrouillage (25) présente au moins une partie de verrouillage (25) supportée de manière mobile sur le cadre de couvercle (14), laquelle peut être verrouillée à une partie d'engagement de couvercle disposée sur le couvercle (13).

5. Dispositif de toit coulissant selon la revendication 4,
**caractérisé en ce que** la partie de verrouillage (25) peut être déplacée entre une première position de verrouillage dans laquelle elle verrouille le couvercle (13) sur le cadre de couvercle (14), et une deuxième position de verrouillage dans laquelle elle libère le couvercle (13) pour enlever le cadre de couvercle (14) et notamment verrouille le cadre de couvercle (14) à un cadre de toit coulissant (4).

6. Dispositif de toit coulissant selon la revendication 4 ou 5,
**caractérisé en ce que** la partie de verrouillage (25) présente un crochet de verrouillage (26) pour une ou la première position de verrouillage et un crochet de verrouillage (27) pour une ou la deuxième position de verrouillage.

7. Dispositif de toit coulissant selon l'une quelconque des revendications 3 à 6,
**caractérisé en ce que** le dispositif de verrouillage ou la partie de verrouillage (25) peut être commandé(e) manuellement de manière directe ou indirecte.

8. Dispositif de toit coulissant selon l'une quelconque des revendications 3 à 7,
**caractérisé en ce que** le dispositif de verrouillage (25) est disposé au niveau du bord avant de l'unité de couvercle (5) ou au niveau de la partie transversale avant (23) du cadre de couvercle.

9. Dispositif de toit coulissant selon l'une quelconque des revendications 1 à 8,
**caractérisé en ce que** l'unité de couvercle (5) peut être déplacée manuellement au moyen d'un dispositif de commande (33, 43) disposé notamment sur le couvercle (13).

10. Dispositif de toit coulissant selon la revendication 9,
**caractérisé en ce que** le dispositif de commande est disposé en tant que module (30) sur le couvercle (13) et le module (30) présente un dispositif de blocage (31) pouvant être commandé par le dispositif de commande, lequel maintient verrouillée l'unité de couvercle (5) dans la position de fermeture sur le cadre de toit coulissant (4) et la déverrouille pour enlever le couvercle (13) du cadre de couvercle (14).
